# EUROPÄISCHE PATENTSCHRIFT

(11) **EP 0 485 789 B1**
(45) Veröffentlichungstag und Bekanntmachung des Hinweises auf die Patenterteilung: **28.12.1994**
(21) Anmeldenummer: 91118285.5
(22) Anmeldetag: 26.10.1991
(51) Int. Cl.: B62D 15/02

(54) **Vorrichtung zur Erfassung und optischen Anzeige des Einschlagwinkels eines gelenkten Rades eines Kraftfahrzeuges**
Apparatus for detection and optical display of the steering lock angle of a steering wheel of an automotive vehicle
Dispositif de détection et affichage optique de l'angle de braquage d'une roue directrice de véhicule automobile

(30) Priorität: 10.11.1990 DE 4035794
(43) Veröffentlichungstag der Anmeldung: 20.05.1992
(73) Patentinhaber: Dr.Ing.h.c. F. Porsche Aktiengesellschaft, 70435 Stuttgart (DE)
(72) Erfinder: Keil, Ralf, W-7256 Mönsheim (DE)

(56) Entgegenhaltungen:
- EP-A- 0 232 072
- EP-A- 0 381 963
- DE-A- 3 732 958
- DE-C- 1 276 346

## Beschreibung

Die Erfindung betrifft eine Vorrichtung zur Erfassung und optischen Anzeige des Einschlagwinkels eines gelenkten Rades eines Kraftfahrzeuges nach der Gattung des Anspruches 1.

Bei einem stillstehenden Kraftfahrzeug ist es von Interesse, vom Fahrerplatz aus festzustellen, in welche Richtung die gelenkten Räder zeigen, damit der Fahrer eine eindeutige Information über die Bewegungsrichtung erhält. Von besonderer Bedeutung ist dies bei Flurförderfahrzeugen, die bekanntermaßen in beengten räumlichen Verhältnissen und mit einer auf einer Gabel unbefestigten Last bewegt werden, so daß ungewollte seitliche Bewegungen beim Anfahren des Fahrzeuges zur Beschädigung von umstehenden Gegenständen, Gütern oder dergleichen oder gar zum Abkippen der Last von der Gabel führen können.

Die EP-OS 232 072 zeigt eine Einrichtung für ein gelenktes Rad, die berührungslos feststellt, ob der aktuelle Einschlagwinkel einen voreingestellten Einschlagwinkel überschreitet. Mit diesem Signal werden die Antriebsmotoren so gesteuert, daß die Lenkbewegung unterstützt wird. Dieses den Einschlagwinkel charakterisierende Signal jedoch nicht an den Fahrer weitergegeben, und es ist nur erkennbar, ob der Einschlagwinkel ober- oder unterhalb des voreingestellten Einschlagwinkels liegt. Zudem sind die als Winkelgeber verwendeten optischen Schaltmittel empfindlich gegenüber Verschmutzungen.

Die DE-OS 38 30 845 schlägt vor, ein Instrument zur Anzeige eines Einschlagwinkels eines gelenkten Rades mit einem optischen Signalgeber zur Anzeige der Vorwärtsfahrtrichtung und gegebenenfalls einem weiteren optischen Signalgeber zur Anzeige der Rückwärtsfahrtrichtung zu versehen. Die Anzeige des Einschlagwinkels soll über einen bewegten Leuchtbalken erfolgen, über dessen Antrieb die vorliegende Druckschrift aber keine Aussage trifft.

Aus der DE-OS 27 04 519 ist eine Vorrichtung zur Anzeige des Einschlagwinkels eines Lenkrades eines Kraftfahrzeuges bekannt, die eine Skala mit optischen Anzeigeelementen verwendet. Zur Anzeige leuchten die dem Lenkeinschlag entsprechenden Anzeigeelemente auf. Für jede Fahrtrichtung ist mindestens ein Anzeigeelement vorgesehen, so daß insgesamt eine große, mit entsprechenden Kosten verbundene Anzahl von Anzeigeelementen benötigt wird.

Die EP 0 381 963 A1 zeigt eine Einrichtung zur Bestimmung des Lenkraddrehwinkels eines Kraftfahrzeuges, bei der ein am Lenkrad angeordneter Drehwinkelgeber als berührungslos arbeitender Drehwinkeländerungsgeber ausgeführt ist. Dieser Drehwinkeländerungsgeber besteht aus einer zylinderisch gewickelten Magnetfolie, die in Umfangsrichtung hinsichtlich ihrer Magnetpolung alternierend magnetisiert ist und zwei hierzu korrespondieren Magnetfeldsensoren, die versetzt angeordnet sind, so daß sie zwei phasenverschobene sinusähnliche Ausgangssignale abgeben.

Aufgabe der Erfindung ist es, ausgehend von der DE-OS 38 30 845 eine Vorrichtung zur Erfassung und Anzeige des Einschlagwinkels eines gelenkten Rades und der Fahrtrichtungseinstellung eines Kraftfahrzeuges zu schaffen, die keine bewegten Teile aufweist und sowohl robust als auch verschmutzungsunempfindlich ist, wobei der Aufwand an Bauelementen gering gehalten werden soll.

Die Aufgabe wird erfindungsgemäß durch die kennzeichnenden Merkmale des Patentanspruchs 1 gelöst. Weitere, die Erfindung ausgestaltende Merkmale sind in den Unteransprüchen enthalten.

Die mit der Erfindung erzielten Vorteile sind vor allem in der Robustheit, der Unempfindlichkeit gegenüber Verschmutzungen, Einbautoleranzen oder dergleichen und geringen Herstellkosten zu sehen. Die Robustheit ergibt sich aus der Verwendung nicht bewegter Teile und insbesondere aus dem Einsatz von Hallgebern in Verbindung mit einem Ringmagnetabschnitt zur Erfassung des Einschlagwinkels. Darüber hinaus sorgt diese Anordnung für Unempfindlichkeit gegenüber Verschmutzung und Einbautoleranzen.

Die Verwendung von nur wenigen Standardbauteilen führt zu geringen Herstellkosten; insbesondere bei der Anzeige wurde die Anzahl der Bauelemente sowohl durch die kombinierte Anzeige von Fahrtrichtungseinstellung und Einschlagwinkel als auch durch die Anzeige von Zwischenpositionen mittels gleichzeitig aufleuchtender, benachbarter Leuchtkörper deutlich verringert. Von Vorteil ist dies ferner für den Fahrer, dem in leicht erkennbarer und unmißverständlicher Art und Weise mittels windrosenförmig angeordneter Leuchtelemente die bevorstehende Bewegungsrichtung des gelenkten Rades angezeigt wird.

Die Erfindung wird nachstehend anhand der in den Zeichnungen dargestellten Ausführungsformen näher erläutert.

Es zeigen:
- Fig. 1: eine Ansicht von vorne auf ein gelenktes Rad eines 3-Rad-Gabelstaplers mit der erfindungsgemäßen Vorrichtung,
- Fig. 2: einen Schnitt nach der Linie II-II der Fig. 1,
- Fig. 3: einen Schnitt nach der Linie III-III der Fig. 1
- Fig. 4: einen Schnitt nach der Linie IV-IV der Fig. 1 bei einem Einschlagwinkel von 45°,
- Fig. 5: eine Darstellung nach der Fig. 4, jedoch einer zweiten Schaltvorrichtung bei einem Einschlagwinkel von 22,5°,
- Fig. 6: eine Aufsicht auf ein Anzeigeinstrument,
- Fig. 7: einen Schaltplan einer Steuerlogik.

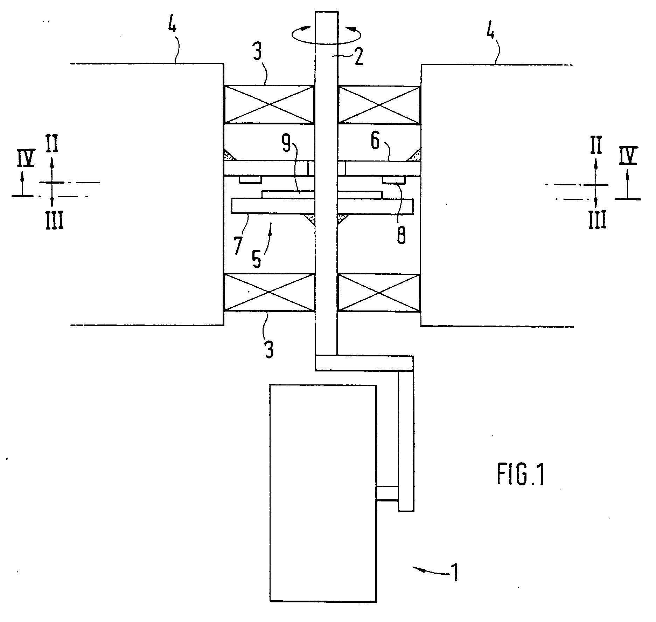

In Fig. 1 ist ein gelenktes Rad 1 eines Fahrzeuges, insbesondere eines 3-Rad-Gabelstaplers dargestellt. Das Rad 1 ist über eine Lenkachse 2 und zwei Kugellager 3 mit einem Aufbau 4 des Gabelstaplers verbunden und hat einen maximalen Einschlagwinkel von +/- 90°.

Eine zur Erfassung des Einschlagwinkels des gelenkten Rades 1 dienende Schaltvorrichtung 5 besteht aus einer kreisringförmigen oberen Trägerplatte 6, die aufbaufest angebracht ist und einer unteren Trägerplatte 7, die mit der Lenkachse 2 starr verbunden ist. Die obere Trägerplatte 6 und die untere Trägerplatte 7 liegen beabstandet parallel zueinander und senkrecht zur Lenkachse 2. Hallgeber 8 sind halbkreisförmig an der Unterseite der oberen Trägerplatte 6 befestigt. Ein Ringmagnetabschnitt 9 ist an der der oberen Trägerplatte 6 zugewandten Seite der unteren Trägerplatte 7 so angeordnet, daß sich die Hallgeber 8 in seinem Wirkungsbereich befinden und von ihm geschaltet werden können. Andere rotationssymmetrische Anordnungen sind. ebenfalls möglich, z. B. zwei konzentrisch ineinanderstehende Zylinder.

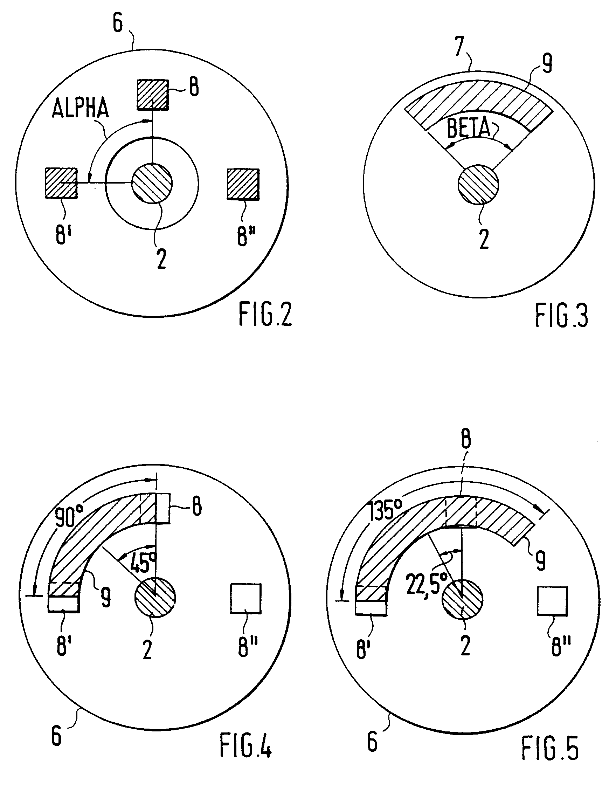

Entsprechend Fig. 2 beträgt ein erster Winkel ALPHA zwischen zwei benachbarten Hallgebern 8 im gewählten Beispiel 90°, so daß 3 Hallgeber 8, 8' und 8'' benötigt werden. Grundsätzlich sind die Hallgeber 8 so auf einem Halbkreis anzuordnen, daß auf den Endpunkten des Halbkreises je ein Hallgeber 8 sitzt und die verbleibenden Hallgeber 8 in gleichen Winkelabständen ALPHA dazwischen angeordnet sind.

Der den Ringmagnetabschnitt 9 beschreibende Kreisdurchmesser ist ebenso groß wie der die Anordnung der Hallgeber 8 beschreibende Kreisdurchmesser. Er umfaßt - wie in Fig. 3 gezeigt - in einem ersten Ausführungsbeispiel einen zweiten Winkel BETA von 90° entsprechend dem 1-fachen des ersten Winkels ALPHA zwischen zwei benachbarten Hallgebern 8.

Wird der Einschlagwinkel von einem Einschlagwinkel von 0° ausgehend größer als 45° (Fig. 4) so wird, unter der Annahme idealisiert punktförmig schaltender Hallgeber 8, der Ringmagnetabschnitt 9 den Hallgeber 8, der bisher durchgeschaltet war, freigeben und gleichzeitig den Hallgeber 8' schalten.

In einer zweiten, besonders vorteilhaften Ausgestaltung (Fig. 5) umfaßt der Ringmagnetabschnitt 9 einen zweiten Winkel BETA' von 135° entsprechend dem 1,5-fachen des ersten Winkels ALPHA zwischen zwei benachbarten Hallgebern 8. Bei ansteigendem Einschlagwinkel wird jetzt ab einem Einschlagwinkel von 22,5° Hallgeber 8' geschaltet. Der Hallgeber 8 bleibt weiterhin durchgeschaltet, bis er ab einem Einschlagwinkel von 67,5° vom Ringmagnetabschnitt 9 freigegeben wird.

Es ergeben sich daraus die folgenden Schaltzustände:

| Ausführung 1: | | |
|---|---|---|
| Hallgeber\Lenkeinschlag | 0 - 45° | 45 - 90° |
| 8 | 1 | 0 |
| 8' | 0 | 1 |

| Ausführung 2: | | | |
|---|---|---|---|
| Hallgeber\Lenkeinschlag | 0 - 22,5° | 22,5 - 67,5° | 67,5 - 90° |
| 8 | 1 | 1 | 0 |
| 8' | 0 | 1 | 1 |

Bei einem Einschlagwinkel in entgegengesetzter Richtung gilt das zuvor Beschriebene für den Hallgeber 8'' anstelle von Hallgeber 8' in analoger Weise.

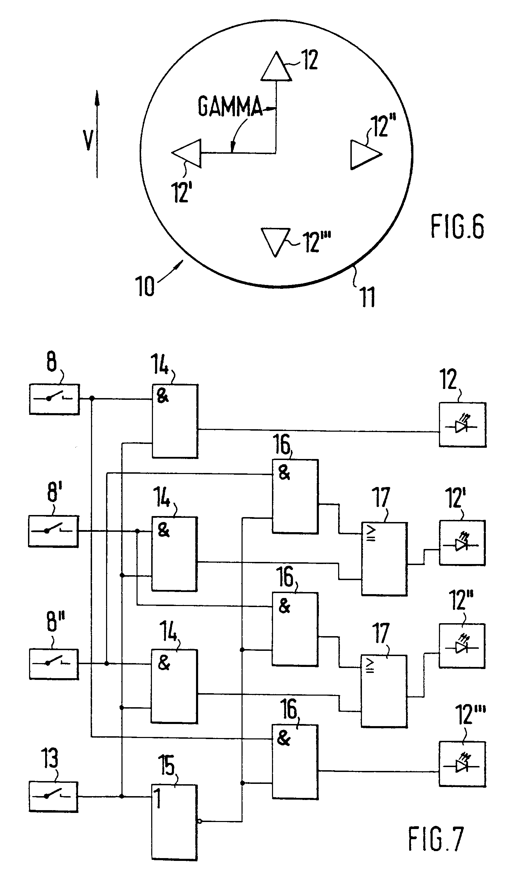

Die Ausgabe der Richtungsinformation erfolgt über ein Anzeigeinstrument 10 (Fig. 6) an den Fahrer. Eine Skala 11 des Anzeigeinstrumentes 10 ist mit Leuchtkörpern, im dargestellten Beispiel 4 Leuchtdioden (LEDs) 12 bestückt, die mit einem dritten Winkel GAMMA beabstandet zueinander kreisförmig angeordnet sind. Die LEDs 12 sind vorteilhafterweise als Dreiecke ausgebildete, deren Spitzen jeweils zum Rand des Anzeigeinstrumentes 10 zeigen. Das Anzeigeinstrument 10 ist so im Fahrzeug eingebaut, daß LED 12 in Vorwärtsfahrtrichtung V zeigt.

Die Zuordnung der Hallgeber 8 zu den LED 12 ist vorteilhafter Weise so gewählt, daß die LED 12 eine Abbildung der Anordnung der Hallgeber 8 darstellen. Der bei Vorwärtsfahrt durchgeschaltete Hallgeber 8 wird so die in Vorwärtsfahrtrichtung zeigende LED 12 zum Aufleuchten bringen. Die anderen LEDs 12' und 12'' sind in analoger Weise den Hallgebern 8' und 8'' zugeordnet.

Dies geschieht bei Vorwärtsfahrt über in einem Schaltplan nach Fig. 7 gezeigte Verknüpfungen der Signale der Hallgeber 8 und eines Fahrtrichtungssignals 13 "vorwärts" mittels erster AND-Gatter 14. Die Ausgangssignale der AND-Gatter 14 schalten dann über eine nicht gezeigte Treiberstufe die LEDs 12.

Bei Rückwärtslauf des nicht gezeigten Antriebsmotors erlischt das Fahrtrichtungssignal 13 "vorwärts" und die AND-Gatter 14 sperren die Signale der Hallgeber 8. Stattdessen ist nun ein mit dem Fahrtrichtungssignal 13 verbundener Inverter 15 durchgeschaltet, dessen Signal AND-Gatter 16 ansteuert und somit die an den AND-Gatter 16 ebenfalls anliegenden Signale der Hallgeber 8 freigibt. Die Ausgänge der AND-Gatter 16 sind dergestalt über hier nicht gezeigte Treiberstufen mit den LEDs 12 verbunden, daß die Zuordnung von Hallgebern 8 zu den LEDs 12 um 180° gegenüber der Zuordnung bei Vorwärtsfahrt gedreht ist. Wenn nun beispielsweise der Hallgeber 8 (vorwärts) geschaltet wird, leuchtet die LED 12''' (rückwärts) auf. In analoger Weise leuchtet bei geschaltetem Hallgeber 8'' (Drehung rechts) die LED 12' (Drehung links) auf.

Den LED's 12' und 12'', die sowohl bei Vorwärts- als auch bei Rückwärtslauf angesteuert werden können, sind OR-Gatter 17 vorgeschaltet. Die Eingänge der OR-Gatter 17 sind mit den Ausgängen der entsprechenden AND-Gatter 14 und 16 verbunden.

Bei Vorwärtsfahrt, d.h., bei vorhandenem Fahrtrichtungssignal 13 gibt es in der zweiten Ausgestaltung des Ringmagnetabschnittes 9 folgende Möglichkeiten der Anzeige:
- das gelenkte Rad 1 steht in Geradeaus-Stellung oder ist maximal 22,5° eingeschlagen. Es leuchtet die LED 12.
- Das gelenkte Rad ist zwischen 22,5° und 67,5° eingeschlagen. LED 12 und LED 12' (Linkseinschlag) bzw. LED 12'' (Rechtseinschlag) leuchten gemeinsam auf. Dies zeigt dem Fahrer an, daß er mit einer Kurvenfahrt rechnen muß, z. B. mit der Fahrt in eine Rechtskurve bei gemeinsam aufleuchtenden LED 12 und LED 12'.
- Das gelenkte Rad ist zwischen 67,5° und 90° eingeschlagen. Es leuchtet die LED 12' (Linkseinschlag) bzw. LED 12'' (Rechtseinschlag) auf. Dem Fahrer wird so mitgeteilt, daß er im wesentlichen mit einer Drehung des Fahrzeuges zu rechnen hat, z. B. einer Drehung der Gabel des Gabelstaplers nach rechts beim Aufleuchten der LED 12'.

Bei Rückwärtsfahrt, d.h. bei nicht vorhandenem Fahrtrichtungssignal 13, sind die Anzeigen um 180° gedreht. Es gibt nun folgende Möglichkeiten der Anzeige:
- Bei Rückwärtsfahrt leuchtet die LED 12.
- Bei Rückwärtsfahrt in eine Rechtskurve leuchtet LED 12 und LED 12'; bei Rückwärtsfahrt in eine Linkskurve die LED 12 und LED 12''.
- Bei Rechtsdrehung der Gabel leuchtet wie im Fall der Vorwärtsfahrt die LED 12'; bei Linksdrehung der Gabel die LED 12''.

In der vorliegenden Ausführung der Erfindung wird dem Fahrer die bevorstehende Bewegungsrichtung des gelenkten Rades angezeigt. Bei einem 3-Rad-Gabelstapler in einer Drehung bzw. Kurvenfahrt entspricht dies, da sich das gelenkte Rad hinter der Drehachse des Fahrzeuges befindet, der Bewegung des Fahrzeughecks. Die Bewegung der Gabel wird jedoch entgegengesetzt verlaufen. Deshalb ist in einer weiteren, nicht dargestellten Ausführung vorgesehen, die LED 12' und LED 12'' zu vertauschen, um so die Bewegung der Gabel anzuzeigen.

Anstelle der Hallgeber 8 können auch andere, durch ein Magnetfeld schaltbare Schaltelemente verwendet werden. Die Schaltvorrichtung 5 kann alternativ auch nach anderen berührungslos wirkenden Prinzipien, wie z. B. dem induktiven oder kapazitiven Prinzip, ausgeführt sein.

Die LEDs 12 können, ohne die erfindungsgemäße Vorrichtung in ihrer Funktion zu beeinträchtigen, durch andere optische Anzeigeelemente ersetzt werden.

## Patentansprüche

1. Vorrichtung zur Erfassung und optischen Anzeige des Einschlagwinkels eines gelenkten Rades (1) und der Fahrtrichtungseinstellung eines Kraftfahrzeuges, insbesondere Flurförderfahrzeuges, mit einer zwischen dem Aufbau (4) und dem Rad (1) angeordneten berührungslos arbeitenden und die Anzeige mittelbar oder unmittelbar ansteuernden Schaltvorrichtung (5), dadurch gekennzeichnet, daß die Erfassung eines Einschlagwinkels des gelenkten Rades (1) durch Hallgeber (8) und wenigstens einem mit diesen zusammenwirkenden Magneten (9) erfolgt, wobei die Hallgeber (8) am Aufbau (4) auf einem Halbkreis angeordnet sind und zueinander gleiche Winkelabstände (ALPHA) aufweisen, der Magnet (9) die Form eines Abschnittes eines Kreisringes hat, sich dieser Abschnitt über einen zweiten Winkel (BETA) erstreckt, der wenigstens das 1-fache des ersten Winkels (ALPHA) zwischen zwei benachbarten Hallgebern (8) beträgt und die Anzeige des jeweiligen Lenkeinschlages durch Leuchtkörper (12) erfolgt, die auf einem Kreis liegend innerhalb einer kreisförmigen Scheibe (11) angeordnet sind und ein dritter Winkel (Gamma) zwischen benachbarten Leuchtkörpern (12) dem ersten Winkel (ALPHA) entspricht.

2. Vorrichtung nach Anspruch 1, dadurch gekennzeichnet, daß der Magnet (9) an einem Träger des Rades (1) befestigt ist.

3. Vorrichtung nach Anspruch 1, dadurch gekennzeichnet, daß der zweite Winkel (BETA) im Bereich des 1,5-fachen des ersten Winkels (ALPHA) liegt.

4. Vorrichtung nach Anspruch 3, dadurch gekennzeichnet, daß der Magnet (9) und die Hallgeber (8) in zwei beabstandeten und zueinander parallelen Ebenen angeordnet sind, die senkrecht zu einer Lenkachse (2) des Rades (1) verlaufen und die Kreismittelpunkte des den Magneten (9) beschreibenden Kreisringes und des Halbkreises, auf dem die Hallgeber (8) angeordnet sind, auf der Lenkachse (2) liegen.

5. Vorrichtung nach einem der vorhergehenden Ansprüche, dadurch gekennzeichnet, daß der erste Winkel (ALPHA) 90° beträgt.

6. Vorrichtung nach Anspruch 5, dadurch gekennzeichnet, daß die Ansteuerung der Leuchtkörper (12) durch eine Verknüpfung der Signale der Hallgeber (8) und eines der Fahrtrichtung entsprechenden Fahrtrichtungssignales (13) erfolgt.

7. Vorrichtung nach Anspruch 6, dadurch gekennzeichnet, daß die Verknüpfung der Signale über jeweils eine AND-Verknüpfung (14) je Hallgeber (8) erfolgt, wobei bei anliegendem Fahrtrichtungssignal (13) "vorwärts" die auf einer ersten Hälfte der kreisförmigen Scheibe (11) liegenden Leuchtkörper (12) als Abbild des Schaltzustandes der Hallgeber (8) angesteuert werden und bei anliegendem Fahrtrichtungssignal (13) "rückwärts" die auf der zweiten Hälfte liegenden Leuchtkörper (12) so angesteuert werden, daß sie das um 180° gedrehte Abbild des Schaltzustandes der Hallgeber (8) darstellen.

8. Vorrichtung nach Anspruch 7, dadurch gekennzeichnet, daß die Verknüpfung der Signale mittels einer digitalen Logikschaltung erfolgt, die über Treibertransistoren die Leuchtkörper (12) ansteuert.

9. Vorrichtung nach einem oder mehreren der vorhergehenden Ansprüche, dadurch gekennzeichnet, daß die Leuchtkörper (12) Leuchtdioden (LEDs) sind.

## Claims

1. Apparatus for the detection and visual display of the angle of lock of a steered wheel (1) and the travelling direction setting of a motor vehicle, in particular on industrial load-conveying vehicle, having a switching device (5) which is arranged between the bodywork (4) and the wheel (1), operates without contact and triggers the display indirectly or directly, characterized in that the detection of an angle of lock of the steered wheel (1) is effected by means of Hall effect devices (8) and at least one magnet (9) cooperating therewith, the Hall effect devices (8) being arranged on the bodywork (4) in a semicircle and having the same angular spacings (ALPHA) from one another, the magnet (9) having the shape of a section of a circular ring, this section extending over a second angle (BETA) which is at least one times the first angle (ALPHA) between two adjacent Hall effect devices (8), and the display of the respective angle of lock being effected by means of luminescent bodies (12) which are arranged in a circle within a circular plate (11) and a third angle (GAMMA) between adjacent luminescent bodies (12) corresponds to the first angle (ALPHA).

2. Apparatus according to Claim 1, characterized in that the magnet (9) is secured to a carrier of the wheel (1).

3. Apparatus according to Claim 1, characterized in that the second angle (BETA) is in the range of 1.5 times the first angle (ALPHA).

4. Apparatus according to Claim 3, characterized in that the magnet (9) and the Hall effect devices (8) are arranged in two spaced and mutually parallel planes which run perpendicular to a steering axle (2) of the wheel (1) and the centres of the circular ring describing the magnet (9) and of the semicircle in which the Hall effect devices (8) are arranged lie on the steering axle (2).

5. Apparatus according to one of the preceding claims, characterized in that the first angle (ALPHA) is 90°.

6. Apparatus according to Claim 5, characterized in that the triggering of the luminescent bodies (12) is effected by a linking of the signals of the Hall effect devices (8) and a travelling direction signal (13) corresponding to the travelling direction.

7. Apparatus according to Claim 6, characterized in that the linking of the signals is effected by way of a respective AND linking operation (14) for each Hall effect device (8), if the travelling direction signal (13) "forwards" is present the luminescent bodies (12) lying on a first half of the circular plate (11) being triggered as an image of the switching state of the Hall effect devices (8) and if the travelling direction signal (13) "backwards" is present the luminescent bodies (12) lying on the second half being triggered such that they represent the image of the switching state of the Hall effect devices (8) rotated through 180°.

8. Apparatus according to Claim 7, characterized in that the linking of the signals is effected by means of a digital logic circuit which triggers the luminescent bodies (12) by way of driver transistors.

9. Apparatus according to one or more of the preceding claims, characterized in that the luminescent bodies (12) are light-emitting diodes (LEDs).

## Revendications

1. Dispositif de détection et d'affichage optique de l'angle de braquage d'une roue directrice (1) et du réglage de la direction de marche d'un véhicule automobile notamment d'un chariot de manutention, comprenant un dispositif de commutation (5) disposé entre la carrosserie (4) et la roue (1), fonctionnant sans contact et excitant indirectement ou directement l'affichage, caractérisé en ce que la détection d'un angle de braquage de la roue directrice (1) a lieu par des détecteurs de Hall (8) et au moins un aimant (9) coopérant avec eux, les détecteurs de Hall (8) étant disposé sur la carrosserie (4) sur un demi-cercle et étant écartés de la même distance angulaire (ALPHA), l'aimant (9) ayant la forme d'une section d'un cercle, cette section s'étendant sur un second angle (BETA) dont la valeur est au moins une fois celle de la valeur du premier angle (ALPHA) entre deux détecteurs de Hall voisins (8) et l'affichage de l'angle de braquage ayant lieu au moyen de corps lumineux (12) qui sont disposés sur un cercle situés à l'intérieur d'un disque de forme circulaire (11), et un troisième angle (GAMMA) entre corps lumineux voisins (12) correspondant au premier angle (ALPHA).

2. Dispositif selon la revendication 1, caractérisé en ce que l'aimant (9) est fixé sur un support de la roue (1).

3. Dispositif selon la revendication 1, caractérisé en ce que le second angle (BETA) est compris dans la plage de 1,5 fois le premier angle (ALPHA).

4. Dispositif selon la revendication 3, caractérisé en ce que l'aimant (9) et les détecteurs de Hall (8) sont disposés dans deux plans parallèles et écartés l'un de l'autre, qui sont perpendiculaires à un axe de direction (2) de la roue (1), et les centres de l'anneau de cercle décrit par l'aimant (9) et du demi-cercle sur lequel sont disposés les détecteurs de Hall (8) sont situés sur l'axe de direction (2).

5. Dispositif selon l'une quelconque des revendications précédentes, caractérisé en ce que le premier angle (ALPHA) est de 90°.

6. Dispositif selon la revendication 5, caractérisé en ce que l'excitation des corps lumineux (12) est réalisée par une liaison logique entre les signaux des détecteurs de Hall (8) et un signal de direction de marche (13) correspondant à la direction de la marche.

7. Dispositif selon la revendication 6, caractérisé en ce que la liaison logique entre les signaux a lieu respectivement par l'intermédiaire d'une liaison ET (14) de chaque détecteur de Hall (8), de sorte que lorsqu'il y a un signal de direction de marche "vers l'avant" (13) qui est présent, les corps lumineux (12) situés sur une première moitié du disque de forme circulaire (11) sont excités pour former l'image de l'état de commutation des détecteurs de Hall (8) et quand un signal de direction de marche "vers l'arrière" (13) est présent, les corps lumineux (12) situés sur la seconde moitié sont excités de manière à représenter l'image de l'état de commutation des détecteurs de Hall (8) tournée sur 180°.

8. Dispositif selon la revendication 7, caractérisé en ce que la liaison logique entre les signaux a lieu au moyen d'un circuit logique numérique qui excite les corps lumineux (12) par l'intermédiaire de transistors de commande.

9. Dispositif selon l'une quelconque des revendications précédentes, caractérisé en ce que les corps lumineux (12) sont des diodes luminescentes (LED).
